# EUROPÄISCHE PATENTSCHRIFT

(11) **EP 2 031 265 B1**
(45) Veröffentlichungstag und Bekanntmachung des Hinweises auf die Patenterteilung: **10.10.2012**
(21) Anmeldenummer: 08014494.2
(22) Anmeldetag: 14.08.2008
(51) Int. Cl.: F16D 25/08, F16J 15/00

(54) **Dichtungsanordnung für ein Ausrücksystem**
Seal assembly for a release system
Dispositif d'étanchéité pour un système de débrayage

(30) Priorität: 27.08.2007 DE 102007040414
(43) Veröffentlichungstag der Anmeldung: 04.03.2009
(60) Teilanmeldung: 12004837.6
(73) Patentinhaber: Schaeffler Technologies AG & Co. KG, 91074 Herzogenaurach (DE)
(72) Erfinder: Ribeiro, Marcelo-Henrique, CEP 18051-000 Sorocaba (BR)

(56) Entgegenhaltungen:
- WO-A1-2006/136132
- DE-A1- 4 434 594
- DE-U1- 8 422 431
- JP-A- 7 332 389

## Beschreibung

Die Erfindung betrifft eine Dichtungsanordnung für ein Ausrücksystem, insbesondere für einen Nehmerzylinder für hydraulische Brems- oder Kupplungsanlagen, zum Beispiel in Kraftfahrzeugen, mit einem Zylindergehäuse, in dem ein Kolben hin und her bewegbar aufgenommen ist, der eine Kolbenstange aufweist, die sich durch ein Durchgangsloch aus dem Zylindergehäuse nach außen erstreckt und mit einer Abdichtung zum Zylindergehäuse oder einen Zentralausrücker mit einer an einem gehäuseförmigen Bauteil befestigten Führungshülse und einem auf dem Außendurchmesser der Führungshülse axial verschiebbaren Ringkolben, der mit seinem Innendurchmesser auf dem Außendurchmesser der Führungshülse entlang gleitet, sowie mit einer Dichtung, die zwischen einem Innendurchmesser des gehäuseförmigen Bauteils und dem Außendurchmesser der Führungshülse und einer in Richtung zum gehäuseförmigen Bauteil weisenden Stirnseite des Kolbens abdichtet.

Aus DE 10 2006 043 074 A1 ist ein Geber- oder Nehmerzylinder für hydraulische Brems- oder Kupplungsanlagen bekannt, der wie alle bisher bekannten Nehmerzylinder eine Ringdichtung aufweist, die in einem Ringspalt zwischen dem Zylindergrundkörper und der Führungshülse angeordnet ist und die eine radial nach innen abstehende, umlaufende Dichtlippe 7 aufweist. Die Dichtlippe 7 der Ringdichtung 6 liegt an der Umfangsfläche eines Kolbens 9 an, der im Zylindergehäuse 2 hin und her bewegbar aufgenommen ist.

Ein in DE 10 2006 047 300 A1 beschriebener Zentralausrücker weist ein gehäuseförmiges Bauteil auf, an dessen freier Stirnseite die Führungshülse eines Ringflansches befestigt ist. Zwischen Gehäuse und Ringflansch erfolgt eine Abdichtung mittels einer Dichtung in Form eines O-Ringes.

Die bisher verwendeten Dichtungen bestehen fast ausschließlich aus Ethylen-Propylen-DienKautschuk (EPDM). Da jedoch EPDM nicht resistent gegenüber Mineralöl ist, führt dies zum Ausfall des Ausrückers. Aus DE 43 39 652 C2 ist ein hydraulisch betätigbarer Ausrücker-Nehmerzylinder für eine Kraftfahrzeugreibungskupplung bekannt, mit dem dieses Problem beseitigt werden soll. Dazu wird die Dichtung mit einem aufwendigen Abstreifelement und einem zwischen Dichtung und Abstreifelement angeordneten Nutring kombiniert, wobei Abstreifelement und Nutring aus hydrierten Nitrilkautschuk (HNBR) hergestellt sein können. HNBR ist ein mechanisch extrem robuster, sehr universell einsetzbarer Werkstoff mit unter anderem hoher Beständigkeit gegen additivhaltige, technische Öle; geringer Dampf- und Gasdurchlässigkeit sowie einem hohen Abriebwiderstand.

Die DE 84 22 43 U1 zeigt einen Nehmerzylinder für einen Kupplungsausrücksystem, bei dem eine Kolbendichtung den Druckraum des Nehmerzylinders gegen den Austritt von beispielsweise Bremsflüssigkeit abdichtet und eine zusätzliche Dichtscheibe aus einem gegen Mineralöl beständigen Material, die auf der dem Druckraum abgewandten Seite an der Innenwandung des Kolbens angeordnet ist, so dass sich die Kolbendichtung zwischen der Dichtscheibe und dem Druckraum befindet, eine Abstreiffunktion gegenüber Verschmutzung durch Mineralöl zur Verfügung stellt.

Aufgabe der Erfindung ist es, eine einfache und zuverlässige Dichtungsanordnung für ein Ausrücksystem zu entwickeln.

Diese Aufgabe wird mit den Merkmalen des ersten Patentanspruchs gelöst, vorteilhafte Ausgestaltungen ergeben sich aus den Unteransprüchen.

Bei der Dichtungsanordnung für ein Ausrücksystem ist erfindungsgemäß eine den Bremsflüssigkeitsaustritt verhindernde erste Dichtung mit einer zweiten Dichtung aus gegen Mineralöl beständigem Material kombiniert.

Die Dichtungsanordnung ist z.B. in einem Zentralausrücker für hydraulische Brems- oder Kupplungsanlagen vorgesehen sein, der ein Gehäuse aufweist, an dessen freier Stirnseite eine Führungshülse mit einem Ringflansch befestigt ist, wobei zwischen Gehäuse und Ringflansch eine Abdichtung durch die Anordnung des ersten Dichtrings und des zweiten Dichtrings erfolgt. Dabei ist zwischen der ersten Dichtung und der zweiten Dichtung eine gehäuseseitige Wand 5 angeordnet.

Bevorzugt ist die erste Dichtung am Ringflansch radial innen (in Richtung zum druckmittelbeaufschlagbaren Druckraum) und die zweite Dichtung am Ringflansch radial außen abdichtend anzuordnen.

Die erste Dichtung besteht bevorzugt aus EPDM und die zweite Dichtung aus HNBR. Es ist möglich, die erste und/oder zweite Dichtung in Form eines O-Rings auszubilden.

Mit der erfindungsgemäßen Lösung wird eine einfache und zuverlässige Doppeldichtung geschaffen, die den Austritt von Bremsflüssigkeit verhindert und gegen Mineralöl resistent ist.

Die Erfindung wird nachfolgend anhand von Ausführungsbeispielen und zugehörigen Zeichnungen näher erläutert. Es zeigen:

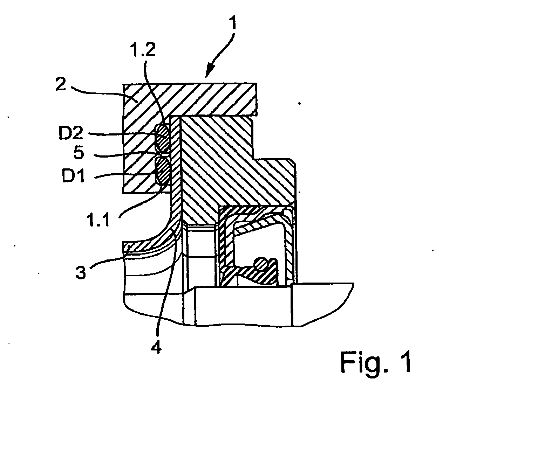

Fig. 1: Dichtungsanordnung in einem Zentralausrücker,

In Figur 1 ist eine in einen Zentralausrücker 1 für hydraulische Brems- oder Kupplungsanlagen integrierte erfindungsgemäße Dichtungsanordnung dargestellt. Der Zentralausrücker 1 weist ein Gehäuse 2 auf, an dessen freier Stirnseite 2.1 eine Führungshülse 3 mit einem Ringflansch 4 befestigt ist. Zwischen Gehäuse 2 und Ringflansch 4 erfolgt die Abdichtung durch die Anordnung der ersten Dichtung D1 und der zweiten Dichtung D2, wobei die erste Dichtung D1 radial innen in einer ersten Nut 1.1 des Gehäuses 1 und die zweite Dichtung D2 radial außen in einer zweiten Nut 1.2 des Gehäuses 1 sitzt. Dadurch wird zwischen beiden Dichtungen D1, D2 eine gehäuseseitige Wand 5 gebildet. Beide Dichtungen D1 und D2 sind in Form eines O-Ringes ausgebildet und dichten zum Ringflansch 4 ab. Der erste Dichtung D1 besteht aus EPDM und die zweite Dichtung D2 aus HNBR.

Ein wesentlicher Vorteil des Ausführungsbeispiels besteht darin, dass bei der erfindungsgemäßen Doppeldichtung in Richtung zum druckmittelbeaufschlagten Druckraum zuerst die erste Dichtung aus EPDM und danach die zweite Dichtung aus HNBR angeordnet ist.

Dadurch wird erstmalig eine einfache und zuverlässig Lösung geschaffen, die den Austritt von Bremsflüssigkeit aus dem Ausrücksystem durch die erste Dichtung aus EPDM und den Mineralöleingang in das Ausrücksystem durch die zweite Dichtung aus HNBR verhindert, wodurch die Lebensdauer entsprechender Systeme wesentlich verbessert wird.

## Patentansprüche

1. Dichtungsanordnung für einen Zentralausrücker (1) für hydraulische Brems- oder Kupplungsanlagen der ein Gehäuse (2) aufweist, an dessen freier Stirnseite eine Führungshülse (3) mit einem Ringflansch (4) befestigt ist, zwischen Gehäuse (2) und Ringflansch (4) die Abdichtung durch die Anordnung des ersten Dichtrings (D1) und des zweiten Dichtrings (D2) erfolgt, wobei der erste Dichtring (D1) aus einem Bremsflüssigkeitsaustritt verhindernden Material und der zweite Dichtring (D2) aus einem gegen Mineralöl beständigen Material besteht, **dadurch gekennzeichnet, dass** zwischen der ersten Dichtung (D1) und der zweiten Dichtung (D2) eine gehäuseseitige Wand (5) angeordnet ist.

2. Dichtungsanordnung nach Anspruch 1, **dadurch gekennzeichnet, dass** die erste Dichtung (D1) am Ringflansch (4) radial innen (in Richtung zum druckmittelbeaufschlagbaren Druckraum) und die zweite Dichtung (D2) am Ringflansch radial außen abdichtend anliegt.

3. Dichtungsanordnung nach einem der Ansprüche 1 bis 2, **dadurch gekennzeichnet, dass** die erste Dichtung (D1) aus EPDM besteht.

4. Dichtungsanordnung nach einem der Ansprüche 1 bis 3, **dadurch gekennzeichnet, dass** die zweite Dichtung (D2) aus HNBR besteht.

5. Dichtungsanordnung nach einem der Ansprüche 1 bis 4, **dadurch gekennzeichnet, dass** die erste Dichtung (D1) und/oder die zweite Dichtung (D2) in Form eines O-Ringes ausgebildet ist/sind.

## Claims

1. Seal assembly for a central release (1) for hydraulic brake or clutch installations, which central release has a housing (2), to the free end face of which a guide sleeve (3) with an annular flange (4) is fastened, sealing taking place between the housing (2) and annular flange (4) by the arrangement of the first sealing ring (D1) and of the second sealing ring (D2), the first sealing ring (D1) consisting of a material preventing the escape of brake fluid, and the second sealing ring (D2) consisting of a material resistant to mineral oil, **characterized in that** a housing-side wall (5) is arranged between the first seal (D1) and the second seal (D2).

2. Seal assembly according to Claim 1, **characterized in that** the first seal (D1) bears sealingly against the annular flange (4) radially on the inside (in the direction of the pressure space loadable by pressure medium) and the second seal (D2) bears sealingly against the annular flange radially on the outside.

3. Seal assembly according to one of Claims 1 and 2, **characterized in that** the first seal (D1) consists of EPDM.

4. Seal assembly according to one of Claims 1 to 3, **characterized in that** the second seal (D2) consists of HNBR.

5. Seal assembly according to one of Claims 1 to 4, **characterized in that** the first seal (D1) and/or the second seal (D2) are/is designed in the form of an O-ring.

## Revendications

1. Dispositif d'étanchéité pour un système de débrayage central (1) pour des installations de frein ou d'embrayage hydrauliques, lequel présente un boîtier (2) sur le côté frontal libre duquel est fixée une douille de guidage (3) avec une bride annulaire (4), l'étanchéité étant réalisée entre le boîtier (2) et la bride annulaire (4) par l'agencement de la première bague d'étanchéité (D1) et de la deuxième bague d'étanchéité (D2), la première bague d'étanchéité (D1) se composant d'un matériau empêchant la sortie de liquide de frein et la deuxième bague d'étanchéité (D2) se composant d'un matériau résistant aux huiles minérales, **caractérisé en ce qu'**entre la première garniture d'étanchéité (D1) et la deuxième garniture d'étanchéité (D2) est disposée une paroi (5) du côté du boîtier.

2. Dispositif d'étanchéité selon la revendication 1, **caractérisé en ce que** la première garniture d'étanchéité (D1) s'applique de manière étanche contre la bride annulaire (4) radialement à l'intérieur (dans la direction de l'espace de pression pouvant être sollicité par un fluide sous pression) et la deuxième garniture d'étanchéité (D2) s'applique de manière étanche contre la bride annulaire radialement vers l'extérieur.

3. Dispositif d'étanchéité selon l'une quelconque des revendications 1 à 2, **caractérisé en ce que** la première garniture d'étanchéité (D1) se compose d'EPDM.

4. Dispositif d'étanchéité selon l'une quelconque des revendications 1 à 3, **caractérisé en ce que** la deuxième garniture d'étanchéité (D2) se compose de HNBR.

5. Dispositif d'étanchéité selon l'une quelconque des revendications 1 à 4, **caractérisé en ce que** la première garniture d'étanchéité (D1) et/ou la deuxième garniture d'étanchéité (D2) est/sont réalisées sous forme de joint torique.
